# EUROPEAN PATENT SPECIFICATION

(11) **EP 4 306 925 B1**
(45) Date of publication and mention of the grant of the patent: **14.10.2026**
(21) Application number: 22766425.7
(22) Date of filing: 04.03.2022
(51) Int. Cl.: G01M 15/04, G01M 15/10, G01M 15/02, F02M 35/10, F02M 31/20, F02B 37/16

(54) **DEVICE AND METHOD FOR EMULATING FORCED INDUCTION SYSTEMS**
VORRICHTUNG UND VERFAHREN ZUR EMULATION VON ZWANGSINDUKTIONSSYSTEMEN
DISPOSITIF ET PROCÉDÉ D'ÉMULATION DE SYSTÈMES DE SURALIMENTATION

(30) Priority: 11.03.2021 ES 202130214
(43) Date of publication of application: 17.01.2024
(73) Proprietor: Universitat Politecnica de Valencia, 46022 Valencia (ES)
(72) Inventor: BENAJES CALVO, Jesús Vicente, 46022 VALENCIA (ES); BERMUDEZ TAMARIT, Vicente Remigio, 46022 VALENCIA (ES); DESANTES FERNANDEZ, José María, 46022 VALENCIA (ES); DOLZ RUIZ, Vicente, 46022 VALENCIA (ES); GALINDO LUCAS, José, 46022 VALENCIA (ES); NOVELLA ROSA, Ricardo, 46022 VALENCIA (ES); SERRANO CRUZ, José Ramón, 46022 VALENCIA (ES)
(74) Representative: Maslanka Kubik, Dorota Irena
(86) International application number: PCT/ES2022/070124
(87) International publication number: WO 2022/189684

(56) References cited:
- EP-A1- 3 530 918
- EP-A1- 3 724 626
- CN-A- 111 927 623
- US-A1- 2004 194 466
- US-A1- 2006 185 425
- US-A1- 2008 276 913
- US-A1- 2013 306 159
- US-A1- 2014 251 252
- US-A1- 2016 349 147
- US-A1- 2017 218 834
- US-A1- 2018 283 990

## Description

### FIELD OF THE ART

The present invention relates generally to the sector of forced induction systems, and more specifically to the emulation of forced induction systems of propulsion sources such as, for example, reciprocating internal combustion engines, fuel cells, etc.; emulation which is performed in the phase of designing said forced induction systems and/or propulsion sources.

### BACKGROUND OF THE INVENTION

In the manufacture of multi-cylinder engines, it is common practice to first design an engine with a single cylinder (single-cylinder engine) that serves as the basis for the subsequent development of the multi-cylinder engine.

In order to reduce costs, in recent times there has been a widespread trend to design a single base cylinder, and to reproduce the base cylinder as many times as necessary to obtain different multi-cylinder engines; that is, to manufacture 3, 4, 6, 12-cylinder engines with cylinders of one and the same type, which are like the base cylinder.

This circumstance also occurs in the manufacture of other types of propulsion sources such as the case, for example, of multi-cell fuel cells: a base cell is first designed, and then several cells are implemented as the base cell to obtain the multi-cell fuel cell.

Propulsion sources (such as engines or fuel cells) are typically coupled to forced induction systems to increase their power. Accordingly, forced induction systems are also a common design focus.

In the design of forced induced propulsion sources it is necessary to take into account multiple operating conditions, both static and dynamic, that the propulsion source may encounter during its service life. In this way, during the development of the propulsion source it is common to simulate different operating conditions in order to analyze its response. This is a delicate task, since achieving a propulsion source that adequately meets expectations depends on its development.

Devices and methods relating to improved engine performance are known in the prior art.

For example, various types of devices and methods for measuring steady-state engine pumping losses are known. Some of said known devices and methods are disclosed in documents US2015211961A1 (Pumping loss calculation device for internal combustion engine), EP1347163A1 (Method for estimating pumping loss in an internal combustion engine), and US2009018748A1 (System and method for a pumping torque estimation model). These devices and methods are intended for measuring pumping losses only in steady state (i.e., in static and non-dynamic conditions).

Devices and methods for optimizing engine operation are also known, as disclosed, for example, in document WO2019118834A1 (Cam phasing control for thermal management), which presents a way to optimize thermal management (to reduce heat losses) of engines by controlling valve opening by means of a cam synchronizer. Another example is the document US2008/276913A1 (Hybrid thermal energy conversion for HCCI heated intake charge system), which discloses a method of operating an internal combustion engine coupled in a hybrid powertrain, the method comprising of extracting waste energy from a component of an electrical power system of the hybrid powertrain, and adjusting intake air temperature during homogeneous charge compression ignition operation of the engine by using said extracted waste energy.

Other devices and methods for the forced induction of engines are also known, as disclosed, for example, in documents EP2023117A1 (Method for supercharging a one-cylinder engine) and FR2891050A1 (Air supercharging plant for diesel-type single-cylinder test bench).

Devices or installations which allow conditioning air in order to supply it to an engine during a test are also known, such that the conditioning simulates certain air conditions depending on a simulated altitude above sea level, as disclosed in documents ES2485618A1 (Device for atmosphere conditioning for testing combustion engines) and ES2398095A1 (Installation for simulating the pressure and temperature conditions of the air drawn in by a reciprocating internal combustion engine).

However, none of the aforementioned documents allows emulating dynamic conditions (i.e., in transient state) of forced induced propulsion sources, before having designed or selected the forced induction system. In particular, the devices of documents ES2485618A1 and ES2398095A1, for example, cannot give a suitable dynamic response mainly because they do not allow independently controlling the intake pressure of the engine with respect to the exhaust counterpressure of said engine. In other words, they do not allow emulating forced induction independently of the exhaust counterpressure of the engine. In fact, these devices are designed so that the intake pressure and exhaust counterpressure are the same. In order to be able to simulate atmospheric conditions based on altitude, it is an essential requirement that the intake area and exhaust area of the engine are kept at the same pressure during the test; to that end, these devices comprise a communication duct between the intake area and the exhaust area of the engine, which causes both pressures (intake pressure and exhaust counterpressure) to be equalized.

A significant part of the situations encountered by forced induced propulsion sources during their service life involve dynamic operating conditions. Therefore, there is still a need in the art for a device that allows performing a dynamic emulation (in transient state) of the response of a propulsion source (e.g., a reciprocating internal combustion engine or a fuel cell) coupled to a forced induction system, in order to be able to design and develop said propulsion source and/or forced induction system associated with a propulsion source. More specifically, it would be desirable to have a device that allows performing a dynamic emulation of accelerations and decelerations of the forced induction systems of the forced induced or turbo-induced propulsion sources.

### SUMMARY OF THE INVENTION

To solve the preceding technical problem, the present invention relates to a device for the dynamic emulation of forced induction systems. Specifically, the invention relates to a device which allows dynamically emulating pressure and temperature variations experienced by the supply air in a forced induced propulsion source such as, for example, the combustion air in a turbo/forced induced reciprocating internal combustion engine (RICE) or the air that circulates through the cathode in a turbo/forced induced fuel cell.

More specifically, a first aspect of the invention relates to a device for the dynamic emulation of forced induction systems of propulsion sources, comprising:
- an inlet tube configured to be connected at one end to an intake of a propulsion source, and to suction air from the environment at the other end, referred to as suction end, for using the air suctioned from the environment as supply air for the propulsion source;
- an outlet tube configured to be connected at one end to an exhaust of the propulsion source, and to expel outlet gases of the propulsion source into the environment at the other end, referred to as discharge end;
- a turbine set comprising a turbine with a variable geometry in the outlet tube and a compressor in the inlet tube, coupled to the turbine, such that the turbine set is configured so that the turbine meets the counterpressure gradients of the outlet gases and recovers part of the energy available in said gases to compress the supply air by means of the compressor;
- one or more electric compressors in the inlet tube, placed in series with the compressor of the turbine set, configured to compress the supply air and reproduce in a controlled manner pressure gradients of the supply air;
- a cooling means arranged in series with the one or more electric compressors, configured to cool the supply air;
- a heating means configured to heat the supply air;
- a heat regulation means for the supply air, configured to regulate the mixture of at least one cold supply air flow proceeding from the cooling means and a hot supply air flow proceeding from the heating means, and to thereby regulate supply air temperature independently with respect to the pressure thereof; such that the supply air temperature gradient is controlled accurately, overcoming the thermal inertia of the cooling means and the heating means.

A second aspect of the present invention relates to a method for the dynamic emulation of forced induction systems of propulsion sources, using a device for emulation according to the first aspect of the present invention. The method for emulation comprises suctioning air from the environment to use it as supply air for the propulsion source; feeding the supply air to the propulsion source; expelling to the environment outlet gases of the propulsion source; with the particularity that one or more of the following actions are performed:
- regulating supply air pressure by controlling the rotation regime of the one or more electric compressors;
- controlling that the operating conditions of the one or more electric compressors are always suitable, using a safety means;
- regulating supply air temperature, using the heat regulation means;
- regulating the counterpressure of the outlet gases of the propulsion source, by modifying the geometry of the turbine of the turbine set.

The device and method for the dynamic emulation of forced induction systems according to the present invention can be applied to propulsion sources such as single-cylinder research RICEs, naturally aspirated or atmospheric RICEs of any type, fuel cells of any type, etc. In all these cases, it is of great interest to have this device and method for dynamic emulation to be able to quickly and efficiently evaluate in an experimental manner the coupling of a propulsion source with different turbo/forced induction systems under dynamic conditions.

Some of the aspects and most significant advantages which can be obtained by means of the device and method for the dynamic emulation of forced induction systems are as follows:
- They allow controlling the dynamic evolution of the supply air pressure and temperature of the propulsion source (for example, combustion air in an engine, or air that circulates through the cathode of a fuel cell), emulating a transient state of acceleration of the turbo/forced induction system.
- They allow simulating the impact of the variations described in the preceding point on performance (and emissions, if this is the case) of the propulsion source (for example, a Single-cylinder or multi-cylinder RICE, a naturally aspirated RICE of any type, a fuel cell of any type, etc.) during transient states of loading controlled by the turbo/forced induction system.
- They allow experimentally emulating any turbo/forced induction technology applicable to propulsion sources (for example, RICEs or fuel cells) to select the optimal technology depending on the propulsion source object of study.
- They allow sizing experimentally the turbo/forced induction system for a given propulsion source (for example, RICEs or fuel cells) considering the dynamic behavior of the assembly.
- They allow accelerating the design phase of forced induced power plants (for example, RICE- or fuel cell-based forced induced power plants) for any industrial application and particularly for applications associated with the transport in which these devices work under highly transient conditions.

Throughout the description and claims, the word "comprises" and variants thereof do not intend to exclude other technical features, additions, components, or steps. Furthermore, the word "comprises" includes the case "consists of". For those skilled in the art, other objects, advantages, and features of the invention will be inferred in part from the description and in part from practice of the invention. The following examples are provided by way of illustration and are not intended to be limiting of the present invention. The matter for which protection is sought is defined by the appended claims.

### BRIEF DESCRIPTION OF THE DRAWINGS

The present invention will be better understood in reference to the following figures, where the following is depicted in an illustrative and non-limiting manner:
Figure 1 is a schematic depiction of the system for dynamic emulation according to a preferred embodiment of the present invention.
Figure 2 is a schematic depiction of the system for dynamic emulation according to another preferred embodiment of the present invention, with two cooling means.
Figure 3 is a schematic depiction of the system for dynamic emulation according to another preferred embodiment of the present invention, with two cooling means, as well as three purge valves associated with a compressor of a turbine set and two electric compressors, respectively.

### DETAILED DESCRIPTION OF PREFERRED EMBODIMENTS

According to a first aspect, the present invention relates to a device for the dynamic emulation of forced induction systems of propulsion sources such as, for example, a forced induction system of a reciprocating internal combustion engine, a forced induction system of a fuel cell, etc.

The device is intended for emulating pressure and temperature gradient ranges for flow rate ranges of a turbo/forced induced propulsion source.

Within the context of the present invention, "dynamic" emulation is understood to mean the ability to reproduce a wide pressure and temperature gradient range, in an independent and accurate manner, which provides a significant difference with respect to the current state of the art. These gradients correspond with those that can be reached in a propulsion source with any turbo/forced induction technology, including electrically assisted turbine sets.

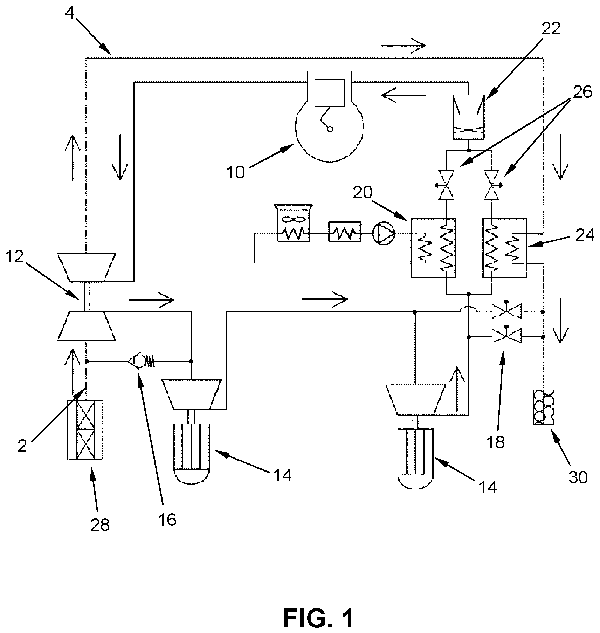

The device for the dynamic emulation according to the preferred embodiment of the present invention comprises an inlet tube (2), an outlet tube (4), a turbine set (12), and one or more compressors, preferably of electric compressor type (14), as explained below:
- The inlet tube (2) is configured to be connected at one end to an intake of a propulsion source (10), and to suction air from the environment at the other end, referred to as suction end. The air suctioned from the environment is used as supply air for the propulsion source (10).
   As it is used herein, the term "inlet tube" must be understood in a broad and non-limiting sense, encompassing not only a single tube, but any assembly of ducts intended for the passage of supply air between the environment and the propulsion source (10).
- The outlet tube (4) is configured to be connected at one end to an exhaust of the propulsion source (10), and to expel outlet gases of the propulsion source (10) into the environment at the other end, referred to as discharge end.
   As it is used herein, the term "outlet tube" must be understood in a broad and non-limiting sense, encompassing not only a single tube, but any assembly of ducts intended for the passage of outlet gases between the propulsion source (10) and the environment. According to a preferred embodiment, the tubes of the device for emulation are DN50 tubes.
- The turbine set (12) comprises a turbine with a variable geometry and a compressor coupled to the turbine. The turbine is arranged in the outlet tube (4), and the compressor in the inlet tube (2). In this way, the turbine set (12) is configured so that the turbine meets the counterpressure gradients of the outlet gases and recovers part of the energy available in said outlet gases to compress the supply air by means of the compressor.
   According to a preferred embodiment, the turbine set (12) has a power of 10 kW. Preferably, the turbine of the turbine set (12) is a centripetal radial turbine.
   According to a particular embodiment, the device for emulation comprises several turbine sets for the purpose, for example, of emulating the operation of a twin-turbo.
- Within the context of the present invention, electric compressor is understood to mean a compressor mechanically moved by an electric engine. The one or more electric compressors (14) are arranged in the inlet tube (2); and are placed in series with the compressor of the turbine set (12). The one or more electric compressors (14) are configured to compress the supply air and reproduce, in a controlled manner, the pressure gradients of the supply air.
   In cases in which the forced induction demand is not very high, the existence of a single electric compressor (14) may be sufficient. Preferably, the device for emulation comprises several electric compressors (14), which allows covering situations in which the forced induction needs are greater. According to the embodiments shown in Figures 1, 2, and 3, the device for emulation comprises several electric compressors (14) arranged in series with respect to one another and with the compressor of the turbine set (12). In this case, the fact that the electric compressors (14) are arranged in series with respect to one another, favors the ability of the device for emulation to achieve high levels of supply air pressure and to reproduce in a controlled manner high pressure gradients of the supply air. According to a preferred embodiment, the one or more electric compressors (14) are radial centrifugal compressors. Preferably, the one or more electric compressors (14) have a total power of 20 kW, and more preferably with 11 kW for low pressure and 9 kW for high pressure.

The present invention has been developed taking into account the need to enable dynamic emulations to be performed, as explained below: The device of the present invention allows independently controlling the intake pressure and the exhaust counterpressure of the propulsion source (10). More specifically, the intake area and the exhaust area of the propulsion source (10) do not communicate with one another, such that the independence of the intake pressure with respect to the exhaust counterpressure is guaranteed; a circumstance that can be seen in Figures 1, 2, and 3. As a result of said independence, the device can carry out dynamic emulations of forced induction systems of propulsion sources.

According to a preferred embodiment, the device for dynamic emulation also comprises a cooling means (20). Preferably, the cooling means (20) is placed in series with the electric compressors (14). The cooling means (20) is configured to cool the supply air, preferably after having been heated during compression. In this way, as a result of the cooling means (20), the "supply air temperature" parameter is made independent with respect to the "supply air pressure" parameter.

According to the preferred embodiment shown in Figure 1, the cooling means (20) is arranged downstream of the two electric compressors (14). According to another embodiment, the cooling means (20) can be arranged between the two electric compressors (14).

Preferably, the cooling means (20) is a heat exchange-type cooler. The cooling means (20) can use as a cooling source a suitable liquid coolant (such as water from a cooling tower, room temperature tap water, etc.), a reverse Rankine cycle-based cooling machine, etc. A combination of different types of cooling can also be used as a cooling source; for example, according to an embodiment shown in Figure 1, the cooling source is a combination of cooling with water from a cooling tower and cooling with a reverse Rankine cycle.

According to a preferred embodiment, the cooling means (20) has a power of 15 kW.

According to a preferred embodiment, the device for dynamic emulation also comprises a heating means (24). The heating means (24) is configured to heat supply air. In this way, as a result of the heating means (24), the "supply air temperature" parameter is made independent with respect to the "supply air pressure" parameter. As shown in Figures 1, 2, and 3, the heating means (24) is preferably a regenerator. The regenerator is configured to recover heat from the outlet gases of the propulsion source (10) circulating through the outlet tube (4), and to use said heat for heating the supply air circulating through the inlet tube (2).

According to a preferred embodiment, the heating means (24) has a power of 40 kW.

Taking into account that the supply air is also heated when being compressed: according to a particular embodiment, it can be considered that the heating means (24) is made up of the actual compressor of the turbine set (12) and the one or more electric compressors (14) themselves, such that an additional device for heating the supply air is dispensed with. In this case, in order to make the "supply air temperature" parameter independent with respect to the "supply air pressure" parameter, a means specific to that end, such as the aforementioned cooling means (20), can be implemented.

According to a preferred embodiment, the device for dynamic emulation also comprises a heat regulation means. The heat regulation means is configured to regulate the mixture of at least one cold supply air flow proceeding from the cooling means (20) and a hot supply air flow proceeding from the heating means (24), which allows supply air temperature to be regulated in an independent manner with respect to the pressure thereof. As a result of the heat regulation means, supply air temperature gradients can be controlled accurately, overcoming the thermal inertia of the cooling means (20) and the heating means (24).

According to a preferred embodiment, the device for dynamic emulation comprises the inlet tube (2), the outlet tube (4), the turbine set (12), the one or more electric compressors (14), the cooling means (20), the heating means (24), and the heat regulation means.

Different features of the heat regulation means are described below according to a preferred embodiment:
- The heat regulation means is integrated in a circuit of parallel branches. Preferably, the circuit of branches is located downstream of the one or more electric compressors (14); i.e., downstream of the electric compressor (14) in the case that there is only one, or of the electric compressor (14) which is arranged last (according to the embodiments of Figures 1, 2, and 3, the second electric compressor (14) which is located farther downstream) in the case of there being several electric compressors (14).
- The heat regulation means comprises one or more mixing valves (26) arranged in one or more of the branches, respectively, regulating the flow rate of the supply air flow through the corresponding branch thereof.

According to the embodiment shown in Figure 1:
The circuit of branches has two branches which originate through a fork of the inlet tube (2) and converge again at a convergence point upstream of the propulsion source (10). Preferably, the heating means (24) is arranged in one branch and the cooling means (20) is arranged in the other branch, such that they are arranged in parallel. The heat regulation means has two mixing valves (26) arranged in respective branches (a mixing valve in one branch and another mixing valve in another branch), which regulate the flow rate of the hot supply air flow and the flow rate of the cold supply air flow, respectively, through the corresponding branch. The mixing at constant pressure of both flows at the convergence point, and accordingly the supply air temperature gradient, is thereby controlled.

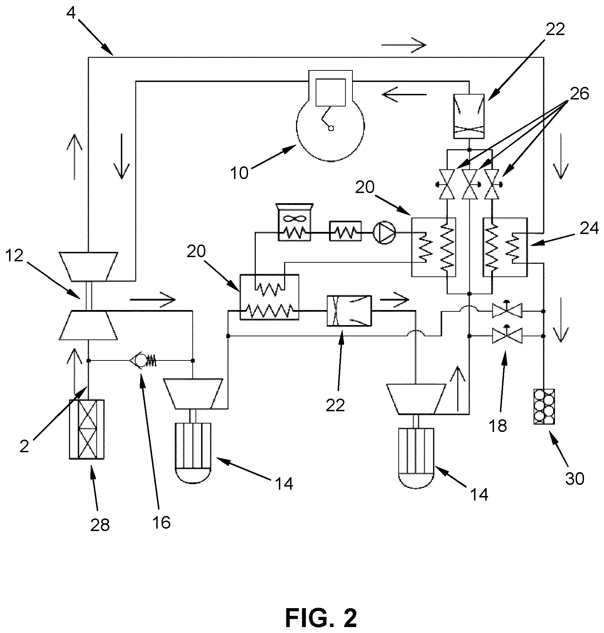

According to the embodiment shown in Figure 2:
The circuit of branches has three branches. Preferably, the heating means (24) is arranged in one branch, a cooling means (20) is arranged in another branch, and the remaining branch runs without going through any heating or cooling means, such that the supply air flow that circulates through this remaining branch does not experience temperature change (referred to as neutral supply air flow). The heat regulation means has three mixing valves (26) arranged in respective branches (one mixing valve for each of the three branches), which regulate the flow rate of the hot supply air flow, the flow rate of the cold supply air flow, and the flow rate of the neutral supply air flow, respectively, through the corresponding branch. The mixing at constant pressure of the flows, and accordingly the supply air temperature gradient, is thereby controlled.

In addition to the configurations that have been explained, the heat regulation means and the circuit of branches in which it is integrated can have other configurations: For example, according to an alternative embodiment, instead of one mixing valve (26) for each branch, the heat regulation means comprises a thermostatic mixing valve (26) arranged at a convergence point of branches. According to another embodiment in which the circuit of branches has two branches, one branch runs without going through any heating or cooling means (for example, because the cooling means is not arranged in the branches), such that the supply air flow that circulates through this branch does not experience temperature change. According to another embodiment, one or more of the branches can be without a mixing valve (26).

According to a preferred embodiment, the mixing valves (26) are linearly regulating knife gate valves, preferably DN100, and more preferably Schuber & Saltzer GS type valve. Preferably, the mixing valve (26) of the branch corresponding to the hot supply air flow is a high-temperature valve which, for example, allows operating temperatures of up to 550°C. According to a preferred embodiment, the device for dynamic emulation comprises one or more condensate separators (22), configured to remove condensed water from the moisture of the supply air. This thereby prevents condensed water from damaging the device for emulation or the propulsion source (10). As is known, condensation can appear under different circumstances such as, for example, after cooling, compression, a combination of both, due to heat losses, etc. To that end, the one or more condensate separators (22) can be arranged at different locations on the device for emulation according to needs such as, for example, after an electric compressor (14), after a cooling means (20), etc.

According to an embodiment shown in Figure 1:
The device for emulation comprises a condensate separator (22) in the inlet tube (2), downstream of the cooling means (20) of the circuit of branches; specifically downstream of the circuit of branches (in which the heat regulation means is integrated) and upstream of the propulsion source (10).

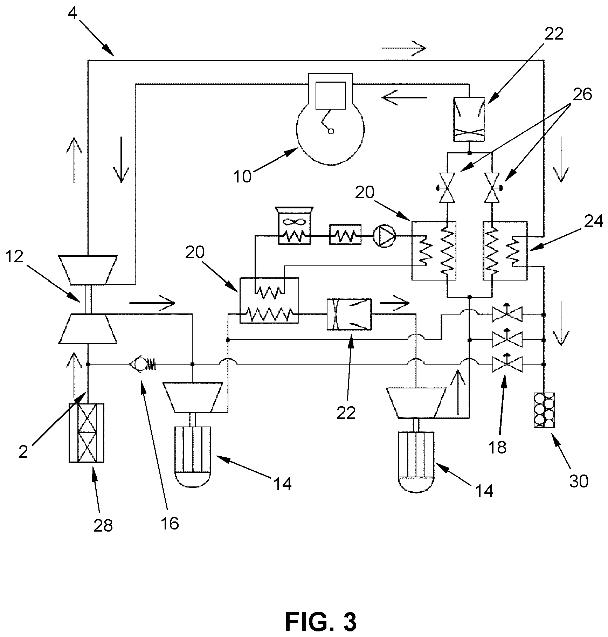

According to the embodiments of Figures 2, 3:
In addition to the condensate separator (22) shown in Figure 1, the device for emulation comprises another condensate separator (22). This another condensate separator (22) is located between the two electric compressors (14), downstream of the cooling means (20) which is also located between the two electric compressors (14). As a result of said arrangement, this another condensate separator (22) prevents the electric compressor located in the second place from being damaged by condensates.

According to a preferred embodiment, the one or more condensate separators (22) are axial cyclonic separators. Preferably, the one or more condensate separators (22) have a DN150 diameter.

According to a preferred embodiment, the device for emulation comprises a safety means configured to control that the operating conditions of the one or more electric compressors (14) are always suitable, in terms of safety, preventing those conditions that may be hazardous for the electric compressors (14), the propulsion source (10), or other components of the device for emulation. Preferably, the safety means comprises one or more air purge valves (18) associated with the one or more electric compressors (14), respectively (one purge valve for each electric compressor). This one or more air purge valves (18) allow the propulsion source (10) to be able to work when the air flow rates are so low that they are within the pumping (release) area of the one or more electric compressors (14). As a result of the one or more air purge valves (18), the "flow rate of the supply air" parameter is made independent with respect to the "supply air pressure" parameter.

The flow rate of the supply air is determined by the actual operation of the propulsion source (10). However, the flow rate of the supply air is also indirectly affected by the operation of the one or more purge valves (18); so, due to their very nature, the one or more purge valves (18) may also allow certain regulation of the flow rate of the supply air, as a secondary function.

The one or more purge valves (18) are arranged in respective purge tubes, which emerge from the inlet tube (2) after the corresponding electric compressor (14), and flow into the outlet tube (4). Specifically, according to the embodiments shown in Figures 1, 2, and 3, the purge valve (18) associated with the first electric compressor (14) (i.e., with the electric compressor which is located upstream of the other electric compressor) is arranged in a purge tube which emerges from the inlet tube (2) between the two electric compressors (14) and flows into the outlet tube (4); the purge valve (18) associated with the second electric compressor (14) (i.e., with the other electric compressor which is located downstream of the first electric compressor) is arranged in another purge tube which emerges from the inlet tube (2) after the second electric compressor (14) and flows into the outlet tube (4).

In the case where the device for emulation has a cooling means (20) between the two electric compressors (14): Preferably and in a more advantageous manner, as shown in Figures 2 and 3, the purge tube corresponding to the first electric compressor (14), emerges from the inlet tube (2), between the electric compressor (14) and said cooling means (20). According to an alternative embodiment, this purge tube can emerge between the condensate separator (22) and the second electric compressor (14).

According to a preferred embodiment, the device for emulation comprises an air purge valve (18) associated with the compressor of the turbine set (12). This purge valve (18) is arranged in a respective purge tube, which emerges from the inlet tube (2) after the compressor of the turbine set (12) and flows into the outlet tube (4). Specifically, according to the embodiment shown in Figure 3, this purge tube emerges from the inlet tube (2) between the compressor of the turbine set (12) and the first electric compressor (14). In this way, according to this embodiment, the device for emulation comprises three air purge valves (18); i.e., the two purge valves (18) associated with the electric compressors (14) (as mentioned above) and the purge valve (18) associated with the compressor of the turbine set (12).

In the case where the heating means (24) is the regenerator explained above, the purge tubes preferably flow into the outlet tube (4) downstream of the regenerator. For example, according to the embodiment shown in Figure 3, the device for emulation comprises three purge tubes corresponding to the three purge valves (18), respectively; the three purge tubes flowing into the outlet tube (4), downstream of the regenerator.

According to a preferred embodiment, the one or more purge valves (18) are linearly regulating knife gate valves, preferably DN100, and more preferably Schuber & Saltzer GS type valves.

Optionally, in order to develop the functions of the one or more purge valves (18), other solutions can be implemented. For example, according to a particular embodiment, the electric compressors (14) have a different size and are arranged parallel to one another; such that, in this case, purge valves (18) are not required for controlling that the operating conditions of the electric compressors (14) are always suitable.

Optionally, the flow rate of the supply air can be regulated using other flow rate regulation means; for example, according to a particular embodiment, the flow rate of the supply air entering the propulsion source (10) is regulated by means of a flow rate regulating valve placed in the intake of the propulsion source (10).

According to the claimed invention, the device for emulation comprises a check valve (16), arranged in a bypass tube which bypasses the compressor of the turbine set (12). As shown in Figures 1, 2, and 3, this bypass tube emerges upstream of the compressor of the turbine set (12) and flows downstream thereof before the next electric compressor (14). Within the context of the present invention, "entry of air through the bypass tube" must be understood to mean the passage of air through the bypass tube towards the intake of the propulsion source (10); and "return of air through the bypass tube" must be understood to mean the passage of air through the bypass tube towards the suction end of the inlet tube (2). The check valve (16) is configured to prevent the return of the supply air through the bypass tube. Likewise, the check valve (16) is configured to prevent the entry of the supply air through the bypass tube when the outlet pressure of the compressor of the turbine set (12) is greater than or equal to the inlet pressure thereof, and otherwise to allow the entry of the supply air through the bypass tube to equalize both pressures. In this way, when the turbine of the turbine set (12) is not capable of recovering sufficient energy from the outlet gases, for example, during rapid acceleration processes, the check valve (16) helps to bypass the compressor of the turbine set (12), thereby preventing any detriment to the dynamic response of the device for emulation. Preferably, the check valve (16) is a DN100 check valve.

According to a preferred embodiment, the device for dynamic emulation comprises an additional cooling means (20), arranged in series with the one or more electric compressors (14). In this way, according to this preferred embodiment, the device for emulation comprises two cooling means (20), i.e., the aforementioned cooling means and the additional cooling means now mentioned.

According to the embodiments shown in Figures 2 and 3, one of the cooling means (20) is arranged between the two electric compressors (14); and the other cooling means is arranged downstream of the electric compressor which is located in the second place (by way of explanation, the one located in the second place is considered to be the one located downstream of the one located in the first place). Preferably, this other cooling means is arranged in one branch of the circuit of branches.

Preferably, the additional cooling means (20) is a heat exchange-type cooler. The additional cooling means (20) can use as a cooling source a suitable liquid coolant (such as water from a cooling tower, room temperature tap water, etc.), a reverse Rankine cycle-based cooling machine, etc. A combination of different types of cooling such as, for example, cooling with water from a cooling tower and cooling with a reverse Rankine cycle can also be used as a cooling source. According to a preferred embodiment, the additional cooling means (20) has a power of 15 kW.

Preferably, as shown in Figures 2 and 3, the cooling means (20) use the same cooling source.

According to a preferred embodiment, the device for emulation further comprises an air filter (28) at the suction end of the inlet tube (2), and a silencer (30) at the discharge end of the outlet tube (4), to clean impurities from the supply air and to reduce both suction and discharge noise of the outlet gases of the propulsion source (10).

According to a preferred embodiment, the device for emulation comprises:
- One or more sensors for measuring operating parameters of the propulsion source (10), for example, supply air temperature in the intake, supply air pressure in the intake, outlet gas pressure in the exhaust.
- A programmable automaton in communication with the one or more sensors, which is configured to control the operation of the device for emulation based on setpoint values and on the readings of the one or more sensors.

Although multiple embodiments are possible as described herein, the precise location of the elements according to the outlet gas and supply air flow diagrams shown in the figures has been designed to achieve the highest possible energy efficiency, utilizing the synergistic effects of different components. For example, the one or more electric compressors (14) heat up the air a lot, the turbine set (12) barely compresses and heats up, the one or more cooling means (20) generate condensates, the regenerator is located after the turbine of the turbine set (12) so as not to destroy exergy, etc.

By way of example, for the typology range of the engines used in passenger vehicles, with powers of between 30 kW and 150 kW, the features of the device for emulation of the present invention, according to a preferred embodiment are:
- One or more electric compressors (14): 20 kW of total power, preferably with 11 kW for low pressure and 9 kW for high pressure.
- Turbine set (12): 10 kW of power.
- Heating means (24): 40 kW of power.
- One or more cooling means (20): 15 kW of power each.

According to a preferred embodiment, the device further comprises other components with the following features:
- The one or more purge valves (18) and the one or more mixing valves (26) are linearly regulating knife gate valves, preferably DN100, and the mixing valve (26) located at the outlet of the heating means (24) is a high-temperature valve (for example, of up to 550°C).
- The check valve (16) is DN100.
- The one or more condensate separators (22) are axial cyclonic separators, designed specifically with NACA profiles to achieve suitable vorticity while minimizing head losses; and have a DN150 diameter.
- The diameters of the tubes connecting the various components are DN50.

According to a second aspect, the present invention relates to a method for the dynamic emulation of forced induction systems of propulsion sources (10), using the device for emulation according to the first aspect of the present invention.

By means of this method, it is possible to dynamically emulate pressure and temperature variations experienced by the supply air in a forced induced propulsion source (10).

Generally, according to a particular embodiment of the present invention:
- The pressure of the supply air can be regulated by means of controlling the rotation regime of the one or more electric compressors (14). Taking into account that the supply air is also heated when compressed, the control of the rotation regime of the one or more electric compressors (14) also allows regulating supply air temperature.
- The counterpressure of the outlet gases of the propulsion source (10) can be regulated by means of controlling the turbine of the turbine set (12).

According to the preferred embodiment of the present invention, the method for emulation comprises suctioning air from the environment to use it as supply air for the propulsion source (10); feeding the supply air to the propulsion source (10); expelling to the environment outlet gases of the propulsion source (10); with the particularity that one or more of the following actions can be performed:
- regulating supply air pressure by controlling the rotation regime of the one or more electric compressors (14);
- controlling that the operating conditions of the one or more electric compressors (14) are always suitable, in terms of safety, preventing those conditions that may be hazardous for the electric compressors (14), the propulsion source (10), or other components of the device for emulation. This control is performed using a safety means preferably comprising the one or more purge valves (18).
- regulating supply air temperature, using the heat regulation means;
- regulating the counterpressure of the outlet gases of the propulsion source (10), by modifying the geometry of the turbine of the turbine set (12).

The method for emulation by means of a device for emulation of the present invention is set forth in more detail below:
- First, air enters the inlet tube (2) from ambient conditions and passes into the compressor of the turbine set (12). The pressure and temperature of the supply air increase in the compressor of the turbine set (12).
   In the preferred case where the device has the check valve (16) as shown in the figures: In the case of an abnormal operation in which the pressure at the outlet of the turbine set (12) is lower than the pressure at the inlet, the check valve (16) would open, allowing the entry of the supply air through the bypass tube and equalizing these pressures.
   After passing through the compressor of the turbine set (12), the supply air passes through the one or more electric compressors (14), increasing its pressure and temperature once again in each electric compressor (14). The passage of the supply air through the compressor of the turbine set (12) and through the one or more electric compressors (14) is controlled in order to achieve the desired conditions of the supply air in the intake of the propulsion source (10).
- In the case of the embodiments shown in Figures 2 and 3 in which the device has a cooling means (20) between two electric compressors (14) and a condensate separator (22) after said cooling means (20): before passing into the second electric compressor (14), the supply air passes through said cooling means (20) where the temperature thereof is lowered; and passes through said condensate separator (22) where water is removed from the moisture which has condensed after cooling in the cooling means (20).
   In the case of embodiments with one or more purge valves (18) associated with the one or more electric compressors (14), such as the embodiments shown in the figures: the one or more purge valves (18) regulate the operating conditions of the one or more electric compressors (14), preventing operating conditions that are hazardous to them or to any component of the installation (installation being understood as the combination of the device for emulation and the propulsion source). In the case of the embodiment shown in Figure 3 in which the device for emulation has a purge valve (18) associated with the compressor of the turbine set (12), this purge valve (18) regulates the operating conditions of the compressor, preventing hazardous operating conditions.
   The one or more purge valves (18) can be opened, for example, in case of emergency.
- According to a preferred embodiment, with a circuit of branches, cooling means (20) in one branch of the circuit of branches, heating means (24) in another branch, and the mixing valves (26) in the branches, such as the embodiments shown in the figures: After being compressed in the one or more electric compressors (14), the supply air enters the circuit of branches. Depending on the opening of the mixing valves (26), the supply air splits into different flows that flow through respective branches for heating by the heating means (24) or for cooling by the cooling means (20).
   In the case of the embodiment shown in Figure 2 in which the circuit of branches has three branches with one of them being intended for the passage of an airflow without temperature change: Depending on the opening of the mixing valves (26), the supply air splits into different flows that flow through the three branches for heating by the heating means (24), cooling by the cooling means (20), or for transport without being cooled or heated.
   After the passage thereof through the branches, the different supply air flows at different temperatures are mixed to achieve the desired temperature. In this way, depending on the opening of the mixing valves (26), the supply air temperature can be varied.
- According to a preferred embodiment, with a condensate separator (22) after the circuit of branches, such as the embodiments shown in the figures: After the temperature has been regulated, the supply air passes into the corresponding condensate separator (22) in which water is removed from the moisture that could have condensed after cooling the mixture.
- Then, the supply air is introduced into the propulsion source (10). In the propulsion source (10), the supply air is used to generate propulsion energy, and outlet gases, which are at a high pressure and a high temperature, are generated.
- The outlet gases expand in the turbine of the turbine set (12) which rotates mechanically coupled to the compressor of the turbine set (12). In the turbine, the gases expand lowering its pressure and temperature.
- Outlet gases are then evacuated into the environment.
   In the case where the heating means (24) is a regenerator as shown in the figures, before being evacuated into the atmosphere, the outlet gases pass through the regenerator and lower their temperature by heating the supply air that circulates through the branch of the heating means (24). After the regenerator, the outlet gases proceeding from the propulsion source (10) are discharged into the atmosphere.

According to a preferred embodiment, the method of the present invention comprises emulating one or more of the following time gradient ranges:
- supply air pressure time gradient range from 5 bar/s to -5 bar/s.
- counterpressure time gradient range of the outlet gases in the exhaust of the propulsion source (also referred to as exhaust counterpressure) from 5 bar/s to -15 bar/s.
- supply air temperature time gradient range from 0.5°C/s to 5°C/s.

Furthermore, these gradients can be also achieved within very wide ranges of absolute pressure and temperature values (also independent of one another) with high accuracy:
- according to a preferred embodiment, a precision and supply air absolute pressure range of 2.0-6.0 bar(A) ± 20 mbar is emulated.
- according to a preferred embodiment, a precision and supply air absolute temperature range of 30-80°C ± 0.5°C is emulated.

According to a preferred embodiment, the device for emulation is controlled by a programmable automaton in communication with one or more sensors. The programmable automaton collects measurements from the one or more sensors which preferably measure the pressure and temperature in the intake of the propulsion source (10) and in the exhaust thereof. To regulate the values of these pressures and temperatures to the setpoint values required by a user, the programmable automaton comprises several control mechanisms, preferably PID controllers, which can act on the actuators of the installation:
- A control mechanism for the one or more electric compressors (14), which regulates the intake pressure based on the rotation regime of the one or more engines coupled to the one or more electric compressors (14), respectively.
- A control mechanism for the turbine of the turbine set (12), which regulates the outlet gas counterpressure based on the modification of the geometry of the turbine.
- A control mechanism for the temperature regulation means, which regulates the intake supply air temperature, preferably based on the positioning of the one or more mixing valves (26).

According to a preferred embodiment, the programmable automaton also comprises a control mechanism for the safety means, preferably a PID controller, which regulates the operating conditions of the one or more electric compressors (14) so that these conditions are always suitable, in terms of safety. Preferably, this control mechanism regulates the operating conditions of the one or more electric compressors (14) based on the positioning of the one or more corresponding purge valves (18).

As set forth above, the device for emulation disclosed herein can simulate forced induction systems of propulsion sources, both in steady state and dynamic operating conditions. The device of the present invention allows independently controlling the intake pressure and the exhaust counterpressure of the propulsion source (10), so dynamic emulations can be carried out. The possibility of simulating the dynamic evolutions of the forced induction systems means that the device disclosed herein is singular and different from any other device for the simulation of forced induction systems of the prior art.

The device of the present invention is based on the combination of several compression means, specifically in a turbine set (12) and one or more electric compressors (14), to enable simulating accelerations and decelerations of turbine sets used in current propulsion sources such as, for example, reciprocating internal combustion engines or fuel cells. The operation of the device for emulation is based on recovering energy from the highpressure outlet gases of the propulsion source (10) for the forced induction of the propulsion source (10) itself. The fact that the one or more electric compressors (14) are electrically operated allows very quick (very dynamic) responses. The compressor of the turbine set (12) helps to consume less electric energy in situations capable of providing positive compression ratios.

The operation of the device for emulation can also be supported by a cooling means (20), a heating means (24), and a heat regulation means which allows supply air temperature to be regulated independently of its pressure.

The device of the present invention constitutes a tool for designing propulsion sources and forced induction systems. As a result of the device of the present invention, it is possible to perform emulations using, as a basis, a "simplification" of the actual propulsion source by way of a mockup thereof with a single working unit (for example, a single-cylinder engine or a single-cell fuel cell). By way of explanation, in the case of reciprocating internal combustion engines, the working unit is a cylinder; similarly, in the case of fuel cells, the working unit is a cell. Herein, a multiple propulsion source refers to a propulsion source with several working units (for example, a multi-cylinder engine); and a simple propulsion source simple refers to a propulsion source with a single working unit (for example, a single-cylinder engine).

By way of example, the process carried out for designing an internal combustion engine forced induced by means of the device for emulation of the present invention is generally described below:
- The device for emulation is coupled to the cylinder of a single-cylinder engine (development base engine) with specific characteristics (cylinder volume, stroke ratio, diameter, etc.).
- The engine is subjected to different forced induction scenarios by means of the device for emulation.
   To that end, different components of the device for emulation are acted upon by varying their operating parameters: for example, control of the rotation regimes of the one or more electric compressors (14), control of the supply air temperature using the temperature regulation means, control of the geometry of the turbine of the turbine set (12), etc.
- The response of the engine is obtained.
- The response of the engine is analyzed and possible changes in the cylinder are evaluated to improve the response of the engine.
- If necessary, the preceding steps are repeated, but with the cylinder of the modified engine, and so on and so forth until finding an optimal solution.
- Finally, the final engine is designed/manufactured with the required cylinders based on the optimal cylinder.

The design of other types of propulsion sources by means of the device for emulation of the present invention such as, for example, the design of fuel cells, is performed in a manner similar to that explained in the preceding paragraph. The steps are simply performed on the corresponding propulsion source, for example, a single-cell fuel cell, instead of on the cylinder of the single-cylinder engine.

The device for emulation can also be used as a design tool to specify the characteristics of the forced induction system that will perform best with the propulsion source (10). The process carried out for designing a forced induction system for a propulsion source (10) without forced induction by means of the device for emulation of the present invention is generally described below:
- By means of the device for emulation, the propulsion source (10) is subjected to tests with different forced induction scenarios. To that end, different components of the device for emulation are acted upon by varying their operating parameters: for example, control of the rotation regimes of the one or more electric compressors (14), control of the supply air temperature using the temperature regulation means, control of the geometry of the turbine of the turbine set (12), etc.
- The response of the propulsion source (10) is analyzed and possible changes in the parameters of the components of the device for emulation are evaluated to improve the response of the propulsion source (10).
- If necessary, the preceding steps are repeated until finding an optimal solution for the forced induction system.
- Finally, with the pressures, flow rates, temperatures, and gradients measured in the tests the forced induction system (turbomachines) is designed/manufactured, based on the technical solution that best reproduces the measured pressure and temperature ratios, the measured flow rates (suitably made dimensionless), and that generates and supports the measured gradients.

Since the device of the present invention allows emulations to be performed using, as a basis, a "simplification" of the actual propulsive source by way of a mockup thereof with a single working unit, the scale of the turbomachines used must necessarily be variable in terms of size and power. This scale must be adapted on one hand to the variety of propulsion sources, for example, to the variety of cylinder capacities of the engines used in automotive (passenger cars, light transport, heavy transport, railway, marine transport, light aviation, etc.), and on the other hand to the number of working units of multiple propulsion sources in comparison with a single propulsion source (for example, cylinders of the multi-cylinder engine in comparison with the single-cylinder engine (12/1, 6/1, 4/1, 3/1). The difficulty of developing a device for emulation flexible enough so as to reproduce pressure and temperature gradient ranges and to adapt to scaling requirements in a single architecture justifies the novelty of the present invention.

In this way, some important circumstances must be taken into account for the development of the device for emulation. The device for emulation must be capable of emulating with one and the same architecture multiple situations with different steady state and dynamic operating conditions. To that end, with the same architecture, it must be possible to vary the scale of the components of the emulator device, such as the turbine set, the one or more electric compressors, the cooling means, the heating means, the heat regulation means, etc.

Due to the design complexity of the actual device for emulation of the present invention, software for the simulation of reciprocating internal combustion engines and fluid systems has been used for its development. By means of this software it has been possible to calculate with the required level of precision the performance of the different components of the device for emulation in order to suitably size said components considering the influence of the (highly non-stationary) pulsating flows generated by the propulsion source on the performance of the device for dynamic emulation.

By way of example, the process carried out for designing the device for emulation by means of the software for application thereof in reciprocating internal combustion engines is generally described below:
- First, a proposal of the device for emulation coupled to a propulsion source (10) with a single working unit, in this case a single-cylinder engine (which proposal corresponds to a virtual model of the device for emulation) is entered in the software, according to a distribution and specific characteristics of the components; which characteristics are obtained, for example, from supplier data and/or empirical data.
- Based on the entered proposal, different scenarios are simulated with the software, varying the operating parameters of one or more components in each simulation.
- The result of the simulation is compared with reference values corresponding to actual forced induction systems.
- If the simulated response deviates from the actual response (reference values), some of the characteristics of the device for emulation are modified, the same validation process is performed again (i.e., entering the proposal in the software, simulating different scenarios, and comparing with reality), and so on and so forth until the result is optimal, i.e., when the result is close enough to the reality.
- Once the proposal has been validated, the device for emulation is manufactured according to said validated proposal.

The design of the device for emulation of the present invention for application thereof to other types of propulsion sources such as, for example, fuel cells, is performed in a manner similar to that explained in the preceding paragraph. The steps are simply performed on the corresponding propulsion source, for example, a fuel cell, instead of the combustion engine.

Based on the foregoing, the device and method of the present invention allows emulating dynamic operating conditions (i.e., in transient state) and steady state operating conditions of forced induced propulsion sources; conditions imposed by a user based, for example, on optimization and design criteria.

The user can perform steady state and dynamic emulations of a forced induced propulsion source, so as to be able to design and develop said propulsion source and/or the forced induction system. This is very useful, for example, in the case of designing and/or improving forced induced racing engines. Normally, for designing and/or improving racing engines, the engine is mounted in the racing vehicle and long track test sessions are performed. In the test sessions, the driver subjects the engine to multiple forced induction scenarios (different accelerations, decelerations, speeds, etc.) in order to obtain, by means of sensors, as much data as possible on the response of the engine and of the forced induction system. By means of the present invention, a large part of said data can be obtained without having to perform these track tests with the racing vehicle, which allows greatly reducing costs.

Although the present invention has been described herein in reference to preferred embodiments thereof, those skilled in the art will understand that various modifications and variations can be applied to said described embodiment without thereby departing from the scope of protection defined by the following attached claims.

## Claims

1. A device for the dynamic emulation of forced induction systems of propulsion sources, comprising:
- an inlet tube (2) configured to be connected at one end to an intake of a propulsion source (10), and to suction air from the environment at the other end, referred to as suction end, for using the air suctioned from the environment as supply air for the propulsion source (10);
- an outlet tube (4) configured to be connected at one end to an exhaust of the propulsion source (10), and to expel outlet gases of the propulsion source (10) into the environment at the other end, referred to as discharge end;
- a turbine set (12) comprising a turbine with a variable geometry in the outlet tube (4) and a compressor in the inlet tube (2), coupled to the turbine, such that the turbine set (12) is configured so that the turbine meets the counterpressure gradients of the outlet gases and recovers part of the energy available in said gases to compress the supply air by means of the compressor;
- one or more electric compressors (14) in the inlet tube (2), placed in series with the compressor of the turbine set (12), configured to compress the supply air and reproduce in a controlled manner pressure gradients of the supply air;
- a cooling means (20) arranged in series with the one or more electric compressors (14), configured to cool the supply air;
- a heating means (24) configured to heat the supply air;
- a heat regulation means for the supply air, configured to regulate the mixture of at least one cold supply air flow proceeding from the cooling means (20) and a hot supply air flow proceeding from the heating means (24), and to thereby regulate supply air temperature independently with respect to the pressure thereof;
- a check valve (16) in a bypass tube which bypasses the compressor of the turbine set (12), the check valve (16) being configured to prevent the return of the supply air through the bypass tube, with the particularity of preventing the entry of supply air through the bypass tube when the outlet pressure of the compressor of the turbine set (12) is greater than or equal to the inlet pressure thereof, and otherwise allowing the entry of supply air through the bypass tube to equalize both pressures.

2. The device according to claim 1, **characterized in that**:
- the turbine of the turbine set (12) is a centripetal radial turbine;
- the one or more electric compressors (14) are radial centrifugal compressors;
- the cooling means (20) is a heat exchange-type cooler;
- the heating means (24) is a regenerator, configured to recover heat from the outlet gases of the propulsion source (10), that circulate through the outlet tube (4), and to use said heat in heating the supply air, that circulates through the inlet tube (2).

3. The device according to any of the preceding claims, **characterized in that** the electric compressors (14) are placed in series with respect to one another.

4. The device according to any of the preceding claims, **characterized in that**:
- the heat regulation means is integrated in a circuit of parallel branches, such that the heating means (24) is arranged in one of the branches and the cooling means (20) is arranged in another branch;
- the heat regulation means comprises one or more mixing valves (26) arranged in one or more of the branches, respectively, regulating the flow rate of the supply air flow through the corresponding branch thereof.

5. The device according to claim 4, **characterized in that**:
- one of the branches of the circuit of branches runs without going through any heating or cooling means, such that the supply air flow that circulates through this branch does not experience temperature change;
- one of the mixing valves (26) is arranged in the branch of the heating means (24) and is a high-temperature valve, with an operating temperature of up to 550°C.

6. The device according to any of the preceding claims, **characterized in that** it comprises:
- a safety means configured to control that the operating conditions of the one or more electric compressors (14) are always suitable, in terms of safety; the safety means comprising one or more air purge valves (18) associated with the one or more electric compressors (14), respectively;
- an air purge valve (18) associated with the compressor of the turbine set (12);
- one or more condensate separators (22), configured to remove condensed water from the moist supply air.

7. The device according to claim 6 in combination with any of claims 4 or 5, **characterized in that** the one or more purge valves (18) and the one or more mixing valves (26) are linearly regulating knife gate valves.

8. The device according to any of claims 6 or 7, **characterized in that** the one or more condensate separators (22) are axial cyclonic separators.

9. The device according to any of the preceding claims, **characterized in that** it comprises an additional cooling means (20) arranged in series with the one or more electric compressors (14).

10. The device according to any of the preceding claims, **characterized in that** it comprises:
- sensors for measuring operating parameters of the propulsion source (10), such as supply air temperature in the intake, supply air pressure in the intake, outlet gas pressure in the exhaust;
- a programmable automaton in communication with the sensors, which is configured to control the operation of the device based on setpoint values and on the readings of the sensors.

11. The device according to any of the preceding claims, **characterized in that** the propulsion source (10) is selected from the group consisting of a reciprocating internal combustion engine and a fuel cell.

12. A method for the dynamic emulation of forced induction systems of propulsion sources (10) using a device for emulation as described in any of claims 1 to 11, which comprises suctioning air from the environment to use it as supply air for the propulsion source (10); feeding the supply air to the propulsion source (10); expelling to the environment outlet gases of the propulsion source (10); with the particularity that one or more of the following actions are performed:
- regulating supply air pressure by controlling the rotation regime of the one or more electric compressors (14);
- controlling that the operating conditions of the one or more electric compressors (14) are always suitable, using a safety means;
- regulating supply air temperature, using the heat regulation means;
- regulating the counterpressure of the outlet gases of the propulsion source (10), by modifying the geometry of the turbine of the turbine set (12).

13. The method according to claim 12, **characterized in that** it comprises
- emulating one or more of the following time gradient ranges:
▪ supply air pressure time gradient range from 5 bar/s to -5 bar/s;
▪ counterpressure time gradient range from 5 bar/s to -15 bar/s;
▪ supply air temperature time gradient range from 0.5°C/s to 5°C/s;
- emulating a precision and supply air absolute pressure range of 2.0 - 6.0 bar(A) ± 20 mbar;
- emulating a precision and supply air absolute temperature range of 30-80°C ± 0.5°C.

14. The method according to any of claims 12 or 13, **characterized in that** the control of the device for emulation is performed by a programmable automaton based on the readings of several sensors which measure the pressure and temperature in the intake of the propulsion source (10) and in the exhaust thereof.

## Patentansprüche

1. Vorrichtung zur dynamischen Emulation von Zwangsinduktionssystemen von Antriebsquellen, umfassend:
- ein Eingangsrohr (2), welches dazu ausgebildet ist, an einem Ende mit einem Einlass einer Antriebsquelle (10) verbunden zu werden und Luft aus der Umgebung am anderen Ende, bezeichnet als Saugende, zu saugen, um die aus der Umgebung gesaugte Luft als Zuführungsluft für die Antriebsquelle (10) zu verwenden;
- ein Ausgangsrohr (4), welches dazu ausgebildet ist, an einem Ende mit einem Auslass der Antriebsquelle (10) verbunden zu werden und Austrittsgase der Antriebsquelle (10) in die Umgebung am anderen Ende, bezeichnet als Auslaufende, auszustoßen;
- einen Turbinensatz (12) umfassend eine Turbine mit einer variablen Geometrie im Ausgangsrohr (4) und einen Kompressor im Eingangsrohr (2), welcher mit der Turbine gekoppelt ist, sodass der Turbinensatz (12) derart ausgebildet ist, dass die Turbine den Gegendruckgradienten der Austrittsgase begegnet und einen Teil der in den genannten Gasen verfügbaren Energie zurückgewinnt, um die Zuführungsluft mittels des Kompressors zu komprimieren;
- einen oder mehrere elektrische Kompressoren (14) im Eingangsrohr (2), welche in Reihe mit dem Kompressor des Turbinensatzes (12) platziert sind und dazu ausgebildet sind, die Zuführungsluft zu komprimieren und auf kontrollierte Weise Druckgradienten der Zuführungsluft wiederzugeben;
- eine Kühleinrichtung (20), welche in Reihe mit dem einen oder den mehreren elektrischen Kompressoren (14) angeordnet ist und dazu ausgebildet ist, die Zuführungsluft zu kühlen;
- eine Heizeinrichtung (24), welche dazu ausgebildet ist, die Zuführungsluft zu heizen;
- eine Wärmeregelungseinrichtung für die Zuführungsluft, welche dazu ausgebildet ist, die Mischung aus mindestens einem kalten Zuführungsluftstrom stammend aus der Kühleinrichtung (20) und einem heißen Zuführungsluftstrom stammend aus der Heizeinrichtung (24) zu regeln und dadurch die Temperatur der Zuführungsluft unabhängig in Bezug auf den Druck derselben zu regeln;
- ein Rückschlagventil (16) in einem Umleitungsrohr, welches den Kompressor des Turbinensatzes (12) umgeht, wobei das Rückschlagventil (16) dazu ausgebildet ist, die Rückkehr der Zuführungsluft über das Umleitungsrohr zu verhindern, mit der Besonderheit, dass es das Eintreten von Zuführungsluft über das Umleitungsrohr verhindert, wenn der Ausgangsdruck des Kompressors des Turbinensatzes (12) größer als oder gleich dem Eingangsdruck desselben ist, und anderenfalls das Eintreten von Zuführungsluft über das Umleitungsrohr zu erlauben, um beide Drücke auszugleichen.

2. Vorrichtung nach Anspruch 1, **dadurch gekennzeichnet, dass**:
- die Turbine des Turbinensatzes (12) eine zentripetale Radialturbine ist;
- der eine oder die mehreren elektrischen Kompressoren (14) radiale Zentrifugalkompressoren sind;
- die Kühleinrichtung (20) ein Wärmeaustauschkühler ist;
- die Heizeinrichtung (24) ein Regenerator ist, welcher dazu ausgebildet ist, Wärme aus den Austrittsgasen der Antriebsquelle (10), welche durch das Ausgangsrohr (4) umlaufen, zurückzugewinnen und die genannte Wärme beim Erhitzen der Zuführungsluft zu verwenden, welche durch das Eingangsrohr (2) umläuft.

3. Vorrichtung nach einem der vorhergehenden Ansprüche, **dadurch gekennzeichnet, dass** die elektrischen Kompressoren (14) in Reihe in Bezug auf einander platziert sind.

4. Vorrichtung nach einem der vorhergehenden Ansprüche, **dadurch gekennzeichnet, dass**:
- die Wärmeregelungseinrichtung in einen Kreislauf von parallelen Abzweigungen integriert ist, sodass die Heizeinrichtung (24) in einer der Abzweigungen angeordnet ist und die Kühleinrichtung (20) in einer anderen Abzweigung angeordnet ist;
- die Wärmeregelungseinrichtung ein oder mehrere Mischventile (26) umfasst, welche jeweils in einer oder mehreren der Abzweigungen angeordnet sind und die Durchflussrate des Zuführungsluftstroms durch die entsprechende Abzweigung desselben regeln.

5. Vorrichtung nach Anspruch 4, **dadurch gekennzeichnet, dass**:
- eine der Abzweigungen des Kreislaufs von Abzweigungen ohne durch eine Heizeinrichtung oder Kühleinrichtung zu gehen verläuft, sodass der Zuführungsluftstrom, welcher durch diese Abzweigung umläuft, keine Temperaturänderung erfährt;
- eins der Mischventile (26) in der Abzweigung der Heizeinrichtung (24) angeordnet ist und ein Hochtemperaturventil, mit einer Betriebstemperatur von bis zu 550°C, ist.

6. Vorrichtung nach einem der vorhergehenden Ansprüche, **dadurch gekennzeichnet, dass** sie Folgendes umfasst:
- eine Sicherheitseinrichtung, welche dazu ausgebildet ist, zu kontrollieren, dass die Betriebsbedingungen des einen oder der mehreren elektrischen Kompressoren (14), bezüglich der Sicherheit, immer geeignet sind; wobei die Sicherheitseinrichtung eins oder mehrere Luftablassventile (18) umfasst, welche jeweils mit dem einen oder den mehreren elektrischen Kompressoren (14) assoziiert sind;
- ein Luftablassventil (18), welches mit dem Kompressor des Turbinensatzes (12) assoziiert ist;
- einen oder mehrere Kondensatabscheider (22), welche dazu ausgebildet sind, Kondenswasser von der feuchten Zuführungsluft zu beseitigen.

7. Vorrichtung nach Anspruch 6 in Kombination mit einem der Ansprüche 4 oder 5, **dadurch gekennzeichnet, dass** das eine oder die mehreren Ablassventile (18) und das eine oder die mehreren Mischventile (26) linear regelnde Plattenschieber sind.

8. Vorrichtung nach einem der Ansprüche 6 oder 7, **dadurch gekennzeichnet, dass** der eine oder die mehreren Kondensatabscheider (22) axiale Zyklonabscheider sind.

9. Vorrichtung nach einem der vorhergehenden Ansprüche, **dadurch gekennzeichnet, dass** sie eine zusätzliche Kühleinrichtung (20) umfasst, welche in Reihe mit dem einen oder den mehreren elektrischen Kompressoren (14) angeordnet ist.

10. Vorrichtung nach einem der vorhergehenden Ansprüche, **dadurch gekennzeichnet, dass** sie Folgendes umfasst:
- Sensoren zur Messung von Betriebsparametern der Antriebsquelle (10), wie der Temperatur der Zuführungsluft im Einlass, dem Druck der Zuführungsluft im Einlass, dem Ausgangsgasdruck im Auslass;
- einen programmierbaren Automat in Verbindung mit den Sensoren, welcher dazu ausgebildet ist, den Betrieb der Vorrichtung basierend auf Vorgabewerten und auf den Ablesungen der Sensoren zu kontrollieren.

11. Vorrichtung nach einem der vorhergehenden Ansprüche, **dadurch gekennzeichnet, dass** die Antriebsquelle (10) aus der Gruppe bestehend aus einem Hubkolbenverbrennungsmotor und einer Brennstoffzelle ausgewählt wird.

12. Verfahren zur dynamischen Emulation von Zwangsinduktionssystemen von Antriebsquellen (10) unter Verwendung einer Vorrichtung zur Emulation nach einem der Ansprüche 1 bis 11, welches das Saugen von Luft aus der Umgebung, um sie als Zuführungsluft für die Antriebsquelle (10) zu verwenden; das Einspeisen der Zuführungsluft zur Antriebsquelle (10); das Ausstoßen in die Umgebung der Austrittsgase der Antriebsquelle (10) umfasst; mit der Besonderheit, dass eine oder mehrere der folgenden Aktionen durchgeführt werden:
- das Regeln des Druckes der Zuführungsluft, indem das Rotationsregime des einen oder der mehreren elektrischen Kompressoren (14) kontrolliert wird;
- das Kontrollieren, dass die Betriebsbedingungen des einen oder der mehreren elektrischen Kompressoren (14), unter Verwendung einer Sicherheitseinrichtung, immer geeignet sind;
- das Regeln der Temperatur der Zuführungsluft, unter Verwendung der Wärmeregelungseinrichtung;
- das Regeln des Gegendruckes der Austrittsgase der Antriebsquelle (10), indem die Geometrie der Turbine des Turbinensatzes (12) verändert wird.

13. Verfahren nach Anspruch 12, **dadurch gekennzeichnet, dass** es Folgendes umfasst:
- das Emulieren eines oder mehrerer der folgenden Zeitgradientenbereiche:
▪ eines Zeitgradientenbereichs des Druckes der Zuführungsluft von 5 bar/s bis -5 bar/s;
▪ eines Zeitgradientenbereichs des Gegendruckes von 5 bar/s bis -15 bar/s;
▪ eines Zeitgradientenbereichs der Temperatur der Zuführungsluft von 0,5°C/s bis 5°C/s;
- das Emulieren eines absoluten Druckbereichs der Zuführungsluft und einer Präzision von 2,0 - 6,0 bar(A) ± 20 mbar;
- das Emulieren eines absoluten Temperaturbereichs der Zuführungsluft und einer Präzision von 30-80°C ± 0,5°C.

14. Verfahren nach einem der Ansprüche 12 oder 13, **dadurch gekennzeichnet, dass** die Kontrolle der Vorrichtung zur Emulation mittels eines programmierbaren Automaten durchgeführt wird, basierend auf den Ablesungen von mehreren Sensoren, welche den Druck und die Temperatur im Einlass der Antriebsquelle (10) und im Auslass derselben messen.

## Revendications

1. Dispositif d'émulation dynamique de systèmes de suralimentation de sources de propulsion, comprenant :
- un tube d'entrée (2) configuré pour être relié dans une extrémité à une admission d'une source de propulsion (10), et pour aspirer de l'air de l'environnement dans l'autre extrémité, dite extrémité d'aspiration, pour utiliser l'air aspiré de l'environnement comme air d'alimentation pour la source de propulsion (10) ;
- un tube de sortie (4) configuré pour être relié dans une extrémité à un échappement de la source de propulsion (10), et pour expulser les gaz de sortie de la source de propulsion (10) vers l'environnement dans l'autre extrémité, dite extrémité de décharge ;
- un ensemble de turbine (12) comprenant une turbine à géométrie variable dans le tube de sortie (4) et un compresseur dans le tube d'entrée (2), couplé à la turbine, de telle sorte que l'ensemble de turbine (12) est configuré de sorte que la turbine réponde aux gradients de contrepression des gaz de sortie et récupère une partie de l'énergie disponible dans lesdits gaz pour comprimer l'air d'alimentation par le biais du compresseur ;
- un ou plusieurs compresseurs électriques (14) dans le tube d'entrée (2), placés en série avec le compresseur de l'ensemble de turbine (12), configurés pour comprimer l'air d'alimentation et reproduire, d'une manière contrôlée, des gradients de pression de l'air d'alimentation ;
- des moyens de refroidissement (20) disposés en série avec l'un ou plusieurs compresseurs électriques (14), configurés pour refroidir l'air d'alimentation ;
- des moyens de chauffage (24) configurés pour chauffer l'air d'alimentation ;
- des moyens de régulation thermique pour l'air d'alimentation, configurés pour réguler le mélange d'au moins un flux d'air d'alimentation froid issu des moyens de refroidissement (20) et un flux d'air d'alimentation chaud issu des moyens de chauffage (24), et pour réguler ainsi la température de l'air d'alimentation indépendamment par rapport à la pression de celui-ci ;
- un clapet antiretour (16) dans un tube de dérivation qui contourne le compresseur de l'ensemble de turbine (12), le clapet antiretour (16) étant configuré pour empêcher le retour de l'air d'alimentation à travers le tube de dérivation, ayant la particularité d'empêcher l'entrée d'air d'alimentation à travers le tube de dérivation lorsque la pression de sortie du compresseur de l'ensemble de turbine (12) est supérieure ou égale à la pression d'entrée de celui-ci, et en cas contraire permettre l'entrée d'air d'alimentation à travers le tube de dérivation pour égaliser les deux pressions.

2. Dispositif selon la revendication 1, **caractérisé en ce que** :
- la turbine de l'ensemble de turbine (12) est une turbine radiale centripète ;
- l'un ou plusieurs compresseurs électriques (14) sont des compresseurs centrifuges radiaux ;
- les moyens de refroidissement (20) sont un refroidisseur de type échangeur de chaleur ;
- les moyens de chauffage (24) sont un régénérateur, configuré pour récupérer de la chaleur à partir des gaz de sortie de la source de propulsion (10), qui circulent à travers le tube de sortie (4), et pour utiliser ladite chaleur pour le chauffage de l'air d'alimentation, qui circule à travers le tube d'entrée (2).

3. Dispositif selon l'une quelconque des revendications précédentes, **caractérisé en ce que** les compresseurs électriques (14) sont placés en série les uns par rapport aux autres.

4. Dispositif selon l'une quelconque des revendications précédentes, **caractérisé en ce que** :
- les moyens de régulation thermique sont intégrés dans un circuit de branches parallèles, de telle sorte que les moyens de chauffage (24) sont disposés dans l'une des branches et les moyens de refroidissement (20) sont disposés dans une autre branche ;
- les moyens de régulation thermique comprennent une ou plusieurs vannes de mélange (26) disposées dans l'une ou plusieurs des branches, respectivement, régulant le débit du flux d'air d'alimentation à travers la branche correspondante de ceux-ci.

5. Dispositif selon la revendication 4, **caractérisé en ce que** :
- l'une des branches du circuit de branches s'étend sans traverser aucun des moyens de chauffage ou de refroidissement, de telle sorte que le flux d'air d'alimentation qui circule à travers cette branche ne subit pas de changement de température ;
- l'une des vannes de mélange (26) est disposée dans la branche des moyens de chauffage (24) et c'est une vanne à haute température, avec une température de fonctionnement allant jusqu'à 550 °C.

6. Dispositif selon l'une quelconque des revendications précédentes, **caractérisé en ce qu'**il comprend :
- des moyens de sécurité configurés pour contrôler que les conditions de fonctionnement de l'un ou plusieurs compresseurs électriques (14) sont toujours appropriées, en termes de sécurité ; les moyens de sécurité comprenant une ou plusieurs vannes de purge d'air (18) associées à l'un ou plusieurs compresseurs électriques (14), respectivement ;
- une vanne de purge d'air (18) associée au compresseur de l'ensemble de turbine (12) ;
- un ou plusieurs séparateurs de condensat (22), configurés pour éliminer l'eau condensée à partir de l'air d'alimentation humide.

7. Dispositif selon la revendication 6, en combinaison avec l'une quelconque des revendications 4 ou 5, **caractérisé en ce que** l'une ou plusieurs vannes de purge (18) et l'une ou plusieurs vannes de mélange (26) sont des vannes à guillotine de régulation linéaire.

8. Dispositif selon l'une quelconque des revendications 6 ou 7, **caractérisé en ce que** l'un ou plusieurs séparateurs de condensat (22) sont des séparateurs cycloniques axiaux.

9. Dispositif selon l'une quelconque des revendications précédentes, **caractérisé en ce qu'**il comprend des moyens de refroidissement (20) additionnels disposés en série avec l'un ou plusieurs compresseurs électriques (14).

10. Dispositif selon l'une quelconque des revendications précédentes, **caractérisé en ce qu'**il comprend :
- des capteurs pour mesurer des paramètres de fonctionnement de la source de propulsion (10), tels que la température d'air d'alimentation dans l'admission, la pression d'air d'alimentation dans l'admission, la pression de gaz de sortie dans l'échappement ;
- un automate programmable en communication avec les capteurs, qui est configuré pour contrôler le fonctionnement du dispositif en fonction de valeurs de consigne et des lectures des capteurs.

11. Dispositif selon l'une quelconque des revendications précédentes, **caractérisé en ce que** la source de propulsion (10) est choisie dans le groupe constitué d'un moteur à mouvement alternatif à combustion interne et une pile à combustible.

12. Procédé d'émulation dynamique de systèmes de suralimentation de sources de propulsion (10) en utilisant un dispositif d'émulation selon l'une quelconque des revendications 1 à 11, qui comprend l'aspiration d'air de l'environnement pour l'utiliser comme air d'alimentation pour la source de propulsion (10) ; la fourniture de l'air d'alimentation à la source de propulsion (10) ; l'expulsion vers l'environnement de gaz de sortie de la source de propulsion (10) ; ayant la particularité de réaliser une ou plusieurs des actions suivantes :
- réguler la pression d'air d'alimentation en contrôlant le régime de rotation de l'un ou plusieurs compresseurs électriques (14) ;
- contrôler que les conditions de fonctionnement de l'un ou plusieurs compresseurs électriques (14) sont toujours appropriées, en utilisant des moyens de sécurité ;
- réguler la température d'air d'alimentation, en utilisant les moyens de régulation thermique ;
- réguler la contrepression des gaz de sortie de la source de propulsion (10), en modifiant la géométrie de la turbine de l'ensemble de turbine (12).

13. Procédé selon la revendication 12, **caractérisé en ce qu'**il comprend
- émuler une ou plusieurs des plages de gradient dans le temps suivants :
▪ plage de gradient dans le temps de pression d'air d'alimentation de 5 bar/s jusqu'à -5 bar/s ;
▪ plage de gradient dans le temps de contrepression de 5 bar/s jusqu'à -15 bar/s ;
▪ plage de gradient dans le temps de température d'air d'alimentation de 0,5 °C/s jusqu'à 5 °C/s ;
- émuler une précision et plage de pression absolue d'air d'alimentation de 2,0 - 6,0 bar(A) ± 20 mbar ;
- émuler une précision et plage de température absolue d'air d'alimentation de 30-80 °C ± 0,5 °C.

14. Procédé selon l'une quelconque des revendications 12 ou 13, **caractérisé en ce que** le contrôle du dispositif d'émulation est réalisé par un automate programmable en fonction des lectures de plusieurs capteurs qui mesurent la pression et la température dans l'admission de la source de propulsion (10) et dans l'échappement de celle-ci.
